(19) Europäisches Patentamt
European Patent Office
Office européen des brevets

(11) EP 1 208 669 B1

(12) # EUROPÄISCHE PATENTSCHRIFT

(45) Veröffentlichungstag und Bekanntmachung des Hinweises auf die Patenterteilung:
**29.11.2006 Patentblatt 2006/48**

(21) Anmeldenummer: **00949296.8**

(22) Anmeldetag: **10.07.2000**

(51) Int Cl.:
***H04L 9/08*** *(2006.01)*

(86) Internationale Anmeldenummer:
**PCT/EP2000/006510**

(87) Internationale Veröffentlichungsnummer:
**WO 2001/013567 (22.02.2001 Gazette 2001/08)**

(54) **VERFAHREN ZUM ETABLIEREN EINES GEMEINSAMEN SCHLÜSSELS FÜR EINE GRUPPE VON MINDESTENS DREI TEILNEHMERN**

METHOD FOR ESTABLISHING A COMMON KEY FOR A GROUP OF AT LEAST THREE SUBSCRIBERS

PROCEDE PERMETTANT D'ETABLIR UNE CLE COMMUNE D'UN GROUPE D'AU MOINS TROIS ABONNES

(84) Benannte Vertragsstaaten:
**AT BE CH CY DE DK ES FI FR GB GR IE IT LI LU MC NL PT SE**

(30) Priorität: **12.08.1999 DE 19938198**

(43) Veröffentlichungstag der Anmeldung:
**29.05.2002 Patentblatt 2002/22**

(73) Patentinhaber: **Deutsche Telekom AG**
**53113 Bonn (DE)**

(72) Erfinder:
- **MARTIN, Tobias**
**D-35466 Rabenau (DE)**
- **SCHAFFELHOFER, Ralf**
**D-64285 Darmstadt (DE)**
- **SCHWENK, Jörg**
**D-64807 Dieburg (DE)**

(56) Entgegenhaltungen:
**EP-A- 0 535 863**

- **LENNON R E ET AL: "Cryptographic key distribution using composite keys" BIRMINGHAM,ALABAMA, DEC.3-6, 1978,NEW YORK, I.E.E.E,US, Bd. CONF. 1978, 3. Dezember 1978 (1978-12-03), Seiten 26101-26116-6, XP002098158**
- **MENEZES ET AL.: "HANDBOOK OF APPLIED CRYPTOGRAPHY" 1997 , CRC PRESS , BOCA RATON (US) XP002152150 Seite 528, Zeile 22 - Zeile 24**
- **BURMESTER M ET AL: "SECURE AND EFFICIENT CONFERENCE KEY DISTRIBUTION SYSTEM" ADVANCES IN CRYPTOLOGY-EUROCRYPT. INTERNATIONAL CONFERENCE ON THE THEORY AND APPLICATION OF CRYPTOGRAPHIC TECHNIQUES,SPRINGER VERLAG,DE, 1995, Seiten 275-286, XP000934269 in der Anmeldung erwähnt**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 208 669 B1

## Beschreibung

Die Erfindung betrifft ein Verfahren zum Etablieren eines gemeinsamen Schlüssels innerhalb einer Gruppe von Teilnehmern gemäß dem Oberbegriff des unabhängigen Anspruchs. Verschlüsselungsverfahren in vielfältiger Art gehören zum Stand der Technik und haben zunehmend kommerzielle Bedeutung. Sie werden dazu eingesetzt, Nachrichten über allgemein zugängliche Übemagungsmedien zu übertragen, wobei aber nur die Besitzer eines Krypto-Schlüssels diese Nachrichten im Klartext lesen können.

Ein bekanntes Verfahren zur Etablierung eines gemeinsamen Schlüssels über unsichere Kommunikationskanäle ist z. B. das Verfahren von W. Diffie und W. Hellmann (siehe DH-Verfahren W. Diffie und M. Hellmann, siehe New Directions in Cryptography, IEEE Transaction on Information Theory, IT-22(6): 644-654, November 1976).

Grundlage des Diffie Hellmann Schlüsselaustausches (DH-Schlüsselaustausch) ist die Tatsache, daß es praktisch unmöglich ist, Logarithmen modulo einer großen Primzahl p zu berechnen. Dies machen sich Alice und Bob in dem unten abgebildeten Beispiel zunutze, indem sie jeweils eine Zahl x bzw. y kleiner als p (und teilerfremd zu p-1) geheim wählen. Dann senden sie sich (nacheinander oder gleichzeitig) die x-te (bzw. y-te) Potenz modulo p einer öffentlich bekannten Zahl $\alpha$ zu. Aus den empfangenen Potenzen können sie durch erneutes Potenzieren modulo p mit x bzw. y einen gemeinsamen Schlüssel K: = $\alpha^{xy}$ mod p berechnen. Ein Angreifer, der nur $\alpha^x$ mod p und $\alpha^y$ mod p sieht, kann daraus K nicht berechnen. (Die einzige heute bekannte Methode dazu bestünde darin, zunächst den Logarithmus z. B. von $\alpha^x$ zur Basis $\alpha$ modulo p zu berechnen, und dann $\alpha^y$ damit zu potenzieren.)

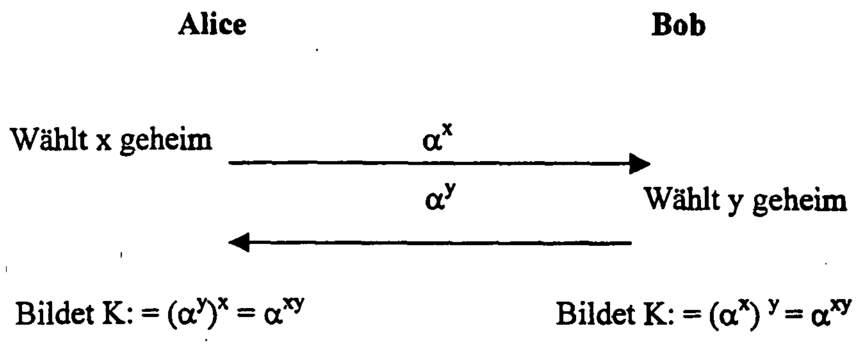


Beispiel für Diffie-Hellmann-Schlüsselaustausch

Das Problem beim DH-Schlüsselaustausch besteht darin, daß Alice nicht weiß, ob sie tatsächlich mit Bob kommuniziert, oder mit einem Betrüger. In den IPSec-Standards der Internet Engineering Task Force (IETF RFC 2412: The OAKLEY Key Determination Protocol) wird dieses Problem durch den Einsatz von Public-Key-Zertifikaten gelöst, in denen durch eine vertrauenswürdige Instanz die Identität eines Teilnehmers mit einem öffentlichen Schlüssel verknüpft wird. Dadurch wird die Identität eines Gesprächspartners überprüfbar.

Der DH-Schlüsselaustausch kann auch mit anderen mathematischen Strukturen realisiert werden, z. B. mit endlichen Körpern GF ($2^n$) oder Elliptischen Kurven. Mit diesen Alternativen kann man die Performance verbessern. Dieses Verfahren ist allerdings nur zur Vereinbarung eines Schlüssels zwischen zwei Teilnehmern geeignet.

Es wurden verschiedene Versuche unternommen, das DH-Verfahren auf drei oder mehr Teilnehmer zu erweitern (Gruppen DH). Einen Überblick über den Stand der Technik bietet M. Steiner, G. Tsudik, M. Waidner in Diffie-Hellmann Key Distribution Extened to Group Communication, Proc. 3rd ACM Conference on Computer and Communications Security, März 1996, Neu Delhi, Indien.

Eine Erweiterung des DH-Verfahrens auf Teilnehmer A, B und C wird z. B. durch nachfolgende Tabelle beschrieben (Berechnung jeweils mod p):

| Teilnehmer A;B;C | A→B | B→C | C→A |
|---|---|---|---|
| 1. Runde | $g^a$ | $g^b$ | $g^c$ |
| 2. Runde | $g^{ca}$ | $g^{ab}$ | $g^{bc}$ |

Nach Durchführung dieser beiden Runden kann jeder der Teilnehmer den geheimen Schlüssel $g^{abc}$ mod p

berechnen.

Weiterhin ist eine Lösung aus Burmester, Desmedt, A secure and efficient conference key distribution system, Proc. EUROCRYPT'94, Springer LNCS, Berlin 1994 bekannt, bei der zwei Runden zur Generierung des Schlüssels benötigt werden, wobei in der zweiten Runde für n Teilnehmer n Nachrichten der Länge p = ca. 1000Bit gesendet werden müssen.

Weitere relevante Lösungen sind aus M. Burmester and Y. Desmedt, Efficient and secure conference key distribution, Cambridge Workshop on Security Protocols, Springer LNCS 1189, pp 119-129 (1996) bekannt. Hier wird aber vorausgesetzt, daß sichere Kanäle zwischen den Teilnehmern bereits existieren.

Aus Menezes et al: "Handbook of applicd cryptography" 1997 CRC Prcss, Boca Raton (US) XP002152150, Seite 528, Zeile 22-24 ist ein Verfahren zum Etablieren eines gemeinsamen Schlüssels beschrieben, an dem mindestens drei Teilnehmer beteiligt sind. Bei dieser Lösung wird ein Gruppenmitglied (chair) bestimmt, von dem alle Aktivitäten ausgehen. Die Wahl des gemeinsamen Schlüssels K liegt allein beim chair. Anschließend wird der gemeinsame Schlüssel K auf der Basis der jeweils paarweise ermittelten Diffie-Helman-Schlüssel verschlüsselt vom chair zu jedem Gruppenteilnehmer übertragen. Der gemeinsame Schlüssel K ist also immer nur so gut, wie ihn der chair gewählt hat.

Aus Lennon R E et Al: "Cryptographic key distribution using composite keys" Birmingham, Alabama, DEC.3-6, 1978, New York. IEEE,US Bd. CONF 1978,3. Dezember 1978 (1978-12-03), Seiten 26101-26116-6, XP002098158 ist ein Verfahren zum Schlüsselaustausch bekannt, das auf zwei Teilnehmer begrenzt ist. Bei dieser Lösung erzeugt jeder Teilnehmer seine eigene Zufallszahl und übermittelt sie verschlüsselt an den anderen Teilnehmer. Der gemeinsame Schlüssel wird dann von jedem Teilnehmer aus der eigenen Zufallszahl und der vom anderen Teilnehmer empfangenen verschlüsselten Zufallszahl unter Verwendung einer symmetrischen Funktion (EXC-OR) ermittelt.

Bei allen diesen Erweiterungen tritt mindestens eines der folgenden Probleme auf:

- Die Teilnehmer müssen in einer bestimmten Art und Weise geordnet sein, z. B. als Kreis, d.h. eine Struktur der Teilnehmergruppe muß vorher bekannt sein.
- Wird eine zentrale Stelle zur Koordinierung der Schlüsselvereinbarung verwendet, so haben die Teilnehmer gegenüber dieser Zentrale keinen Einfluß auf die Auswahl des Schlüssels.
- Die Rundenzahl ist abhängig von der Teilnehmerzahl.

Diese Verfahren sind aus den o. g. Gründen in der Regel schwer zu implementieren und sehr rechenaufwendig.

Die Weiterbildung des DH-Verfahrens zu einem Public-Key-Verfahren ist aus T. ElGamal "A Public Key Cryptosystem and a Signature Scheme Based on Discrete Logarithms.", IEEE Transactions on Information Theory, Juli 1985 bekannt.

Das erfindungsgemäße Verfahren muß zur Erzeugung eines gemeinsamen Schlüssels innerhalb einer Gruppe von mindestens drei Teilnehmern geeignet sein. Das Verfahren soll so ausgebildet sein, daß es sich gegenüber den bekannten Verfahren durch geringen Rechenaufwand und geringen Kommunikationsbedarf (wenige Runden auch bei vielen Teilnehmern) auszeichnet. Es soll dabei jedoch einen vergleichbaren Sicherheitsstandard wie das DH-Verfahren aufweisen. Das Verfahren muß einfach zu implementieren sein. Informationen über die Struktur der Gruppe sollen für die Durchführung des Verfahrens nicht benötigt werden.

Das erfindungsgemäße Verfahren, das dieser Aufgabenstellung gerecht wird, basiert auf den gleichen mathematischen Strukturen wie das DH-Verfahren und weist daher vergleichbare Sicherheitsmerkmale auf. Im Vergleich zu den bisher vorgeschlagenen Gruppen-DH-Verfahren ist es jedoch wesentlich effizienter im Hinblick auf Rechenaufwand und Kommunikationsbedarf.

Nachfolgend wird das Wirkprinzip des Verfahrens näher erläutert. Die definierten Teilnehmer am Verfahren werden mit T1-Tn und jeder einzelne nicht konkret benannte Teilnehmer mit Ti bezeichnet. Mit Tj werden alle anderen am Verfahren beteiligten Teilnehmer, ausschließlich des jeweiligen Teilnehmers Ti, bezeichnet. Die öffentlich bekannten Komponenten des Verfahrens sind eine öffentlich bekannte mathematische Gruppe G, vorzugsweise die multiplikative Gruppe aller ganzen Zahlen modulo einer großen Primzahl p und ein Element g der Gruppe G, vorzugsweise eine Zahl $0 < g < p$ mit großer multiplikativer Ordnung. Für die Gruppe G können jedoch auch andere geeignete mathematische Strukturen verwendet werden, z. B. die multiplikative Gruppe eines endlichen Körpers oder die Gruppe der Punkte einer elliptischen Kurve. Das Verfahren wird im Folgenden anhand der Gruppe der Zahlen modulo einer Primzahl p beschrieben.

Dem Verfahren liegen vier Verfahrensschritte zugrunde.

Im ersten Verfahrensschritt wird von jedem einzelnen, nicht konkret benannten Teilnehmer Ti eine Nachricht der Form $Ni = g^{zi} \bmod p$ erzeugt und an alle anderen Teilnehmer Tj gesendet, wobei zi vorzugsweise eine mittels eines Zufallsgenerators gewählte zufällige Zahl aus der Menge {1, ... p-2} ist.

Im zweiten Verfahrensschritt berechnet jeder Teilnehmer Ti für jeden weiteren Teilnehmer Tj mit $i \neq j$ aus der empfangenen Nachricht $g^{zj}$ einen gemeinsamen Übertragungsschlüssel $k^{ij}: = (g^{zj})^{zi}$. Da $k^{ij} = k^{ji}$ gilt, kennen die Teilnehmer Ti und Tj jetzt einen gemeinsamen Übertragungsschlüssel $k^{ij}$ und können daher vertraulich kommunizieren.

Im dritten Verfahrensschritt verwendet jeder Teilnehmer Ti den Übertragungsschlüssel $k^{ij}$, um seine Zufallszahl zi vertraulich an die jeweils anderenTeilnehmer Tj zu übertragen. Die Verschlüsselung der Zufallszahl zi mit dem Übertragungsschlüssel $k^{ij}$ erfolgt dabei mittels eines symmetrischen Verschlüsselungsverfahren. Das bedeutet, daß nach Abschluß des Verfahrensschrittes jeder Teilnehmer Ti außer seiner eigenen Zufallszahl auch die verschlüsselten Zufallszahlen aller anderen Teilnehmer Tj kennt, so daß die Voraussetzungen gegeben sind, einen gemeinsamen Schlüssel k zu berechnen.

Im vierten Verfahrensschritt wird bei jedem Teilnehmer Ti der gemeinsame Schlüssel k nach der Beziehung

$$k = f(z1, z2, ..., zn)$$

berechnet, wobei f eine beliebige symmetrische Funktion ist. Symmetrie bedeutet in diesem Fall, daß der Wert der Funktion, auch bei beliebiger Vertauschung der Argumente, der gleiche bleibt. Beispiele für symmetrische Funktionen sind

- Die Multiplikation in einem (endlichen) Körper: k: = z1 ... zn,
- die Addition in einer (endlichen) Gruppe: k: = z1 +...+ zn,
- das bitweise XOR der zi: k: = z1 ⊕...⊕zn,
- die Potenzierung von g mit den zi: k: = $g^{z1 \cdots zn}$
- zahllose weitere Möglichkeiten.

Das Versenden der in Schritt 1 und 2 generierten Nachrichten kann sowohl über Punkt-zu-Punkt-Verbindungen als auch durch Broadcast oder Multicast durchgeführt werden.

Nachfolgend wird das erfindungsgemäße Verfahren anhand eines konkreten Beispiels für drei Teilnehmer A, B und C näher-erläutert. Die Anzahl der Teilnehmer ist jedoch auf beliebig viele Teilnehmer erweiterbar.

Bei diesem Beispiel beträgt die Länge der Zahl p 1024 Bit; g hat eine multiplikative Ordnung von mindestens $2^{160}$.

Das erfindungsgemäße Verfahren läuft nach folgenden Verfahrensschritten ab:

1. Teilnehmer A sendet Na = $g^{za}$ mod p an die Teilnehmer B und C, Teilnehmer B sendet Nb = $g^{zb}$ mod p an die Teilnehmer A und C und Teilnehmer C sendet Nc = $g^{zc}$ mod p an die Teilnehmer A und B.
2. Teilnehmer A berechnet kab = $Nb^{za}$ mod p und kac = $Nc^{za}$ mod p. Teilnehmer B und C verfahren analog.
3. Teilnehmer A sendet die Nachricht Mab = E(kab, za) an Teilnehmer B und die Nachricht Mac = E(kac, za) an Teilnehmer C. Hier bezeichnet E(k, m) die symmetrische Verschlüsselung des Datensatzes m mit dem Algorithmus E unter dem Übertragungsschlüssel $k^{ij}$. Teilnehmer B und C verfahren analog.
4. Teilnehmer A berechnet den gemeinsamen Schlüssel k nach der Funktion k = $g^{ka \cdot kb \cdot kc}$. Analog berechnen die Teilnehmer B und C den gemeinsamen Schlüssel k.

Das oben beschriebene Verfahren kommt mit der minimalen Anzahl von zwei Runden zwischen den Teilnehmern A, B und C aus. Die Anzahl der für die Durchführung des erfindungsgemäßen Verfahrens notwendigen Runden bleibt auch bei einer beliebigen Anzahl von Teilnehmern T1-Tn auf zwei Runden beschränkt.

Eine Variante des Verfahrens besteht darin, vorab einem der Teilnehmer T1-Tn für die Durchführung des zweiten Verfahrensschrittes eine besondere Rolle zuzuweisen. Wird diese Rolle beispielsweise dem Teilnehmer T1 zugeordnet, so werden die Verfahrensschritte 2 und 3 bzw. b und c nur noch von Teilnehmer T1 ausgeführt. Im vierten Verfahrensschritt d berechnen alle am Verfahren beteiligten Teilnehmer T1 - Tn den gemeinsame Schlüssel k nach der Beziehung k: = h(z1, $g^{z2}$, ..., $g^{zn}$), wobei (xl, x2, ..., xn) eine Funktion sein muß, die in den Argumenten x2, ... xn symmetrisch ist. Diese Variante vermindert die Anzahl der zu sendenden Nachrichten drastisch.
Ein Beispiel für eine solche Funktion g ist z. B.

$$k: = h(z1, g^{z2}, ..., g^{zn}) = g^{z1 \cdot z1} \cdot g^{z2 \cdot z1} \cdot \ldots \cdot g^{zn \cdot z1}.$$

Das erfindungsgemäße Verfahren läßt sich vorteilhaft zur Erzeugung eines kryptografischen Schlüssels für eine Gruppe von mehreren, mindestens jedoch drei Teilnehmern einsetzen.

**Aufstellung der Bezugszeichen**

| | |
|---|---|
| T1 - Tn | Teilnehmer 1 bis n |
| Ti | unbestimmter Teilnehmer von T1-Tn |
| Tj | unbestimmter Teilnehmer von T1-Tn, verschieden von Ti. |
| N | Nachricht |
| Ni | Nachricht eines unbestimmten Teilnehmers Ti |
| Mab | Nachricht von Teilnehmer A an Teilnehmer B |
| G | öffentlich bekannte mathematische Gruppe |
| g | Element der Gruppe G |
| p | große Primzahl |
| z | mittels eines Zufallsgenerators gewählte Zufallszahl aus der Menge (1,....p-2) |
| $k^{ij}$; $k^{1j}$ | gemeinsamer Übertragungsschlüssel |
| k | gemeinsamer Schlüssel |
| E(,) | Algorithmus |
| m | Datensatz |
| f(x1,x2,...,xn) | Funktion symmetrisch in x1,x2,...,xn. |
| h(x1,x2,...,xn ) | Funktion symmetrisch in den Argumenten x2,...,xn. |
| A; B; C | Benennung der Teilnehmer im Ausführungsbeispiel |

**Patentansprüche**

1. Verfahren zum Etablieren eines gemeinsamen Schlüssels für eine Gruppe von mindestens drei Teilnehmern unter Verwendung einer öffentlich bekannten mathematischen Gruppe G und einem öffentlich bekannten Element der Gruppe $g \in G$ von großer Ordnung,
**dadurch gekennzeichnet, daß**

   a) jeder Teilnehmer Ti aus dem öffentlich bekannten Element g der Gruppe G und einer von ihm gewählten bzw. erzeugten Zufallszahl zi eine Nachricht Ni = ($g^{zi}$ mod p) erzeugt und an alle anderen Teilnehmer Tj sendet, daß
   b) jeder Teilnehmer Ti aus den von den anderen Teilnehmern Tj,j≠i empfangenen Nachrichten Nj und seiner Zufallszahl zi nach der Funktion $k^{ij}$: = $Nj^{zi}$ = $(g^{zj})^{zi}$ einen Übertragungsschlüssel $k^{ij}$ erzeugt, den wegen der Beziehung $k^{ij} = k^{ji}$ auch der Teilnehmer Tj kennt, daß
   c) jeder Teilnehmer Ti an jeden anderen Teilnehmer Tj seine Zufallszahl zi verschlüsselt schickt, indem er die Nachricht Mij gemäß Mij := E($k^{ij}$, zi) bildet, wobei E($k^{ij}$, zi) ein symmetrischer Verschlüsselungsalgorithmus ist, bei dem der Datensatz zi mit dem gemeinsamen Übertragungsschlüssel $k^{ij}$ verschlüsselt wird, und daß
   d) jeder Teilnehmer Ti den zu etablierenden gemeinsamen Schlüssel k aus seiner eigenen Zufallszahl zi und den von den anderen Teilnehmern erhaltenen Zufallszahlen zj, j≠i, nach der Beziehung

   $$k: = f(z1, ..., zn)$$

   ermittelt, wobei f eine symmetrische Funktion sein muß, die invariant unter der Permutation ihrer Argumente ist.

2. Verfahren zum Etablieren eines gemeinsamen Schlüssels nach Anspruch 1,
**dadurch gekennzeichnet, daß**

   a) alle am Verfahren beteiligten Teilnehmer Ti die von ihnen erzeugte Nachricht Ni = $g^{zi}$ an einen vorab für die Durchführung des nachfolgenden Verfahrensschrittes bestimmten Teilnehmer, wie beispielsweise den ersten Teilnehmer T1, übertragen, daß
   b) der erste Teilnehmer T 1 die empfangenen Nachrichten Nj der anderen Teilnehmer Tj,j≠1 für jeden Teilnehmer Tj einzeln mit seiner Zufallszahl z1 zu jeweils einem Übertragungsschlüssel $k^{1j}$ verschlüsselt, den wegen der Beziehung $k^{1j} = k^{j1}$ auch der Teilnehmer Tj kennt, daß
   c) der erste Teilnehmer T1 an jeden anderen Teilnehmer Tj seine Zufallszahl z1 verschlüsselt schickt, indem

er die Nachricht M1j gemäß M1j := E($k^{1j}$,z1) bildet, wobei E($k^{1j}$, z1) ein symmetrischer Verschlüsselungsalgorithmus ist, bei dem der Datensatz z1 mit dem gemeinsamen Übertragungsschlüssel $k^{1j}$ verschlüsselt wird, und daß

d) jeder Teilnehmer Ti den zu etablierenden gemeinsamen Schlüssel k aus den Werten Ni und Nj, j≠i und der vom ersten Teilnehmer T1 verschlüsselt übertragenen Zufallszahl z1 mit Hilfe der Formel

$$k: = h\,(z1, g^{z2}, ..., g^{zn})$$

ermittelt, wobei h (z1, $g^{z2}$, ..., $g^{zn}$) eine in den Argumenten $g^{z2}$, ..., $g^{zn}$ symmetrische Funktion ist.

## Claims

1. Method for establishing a shared key for a group of at least three subscribers using a publicly known mathematical group G and a publicly known element of the group g ∈ G of high order, **characterized in that**

   a) each subscriber Ti generates a message Ni = ($g^{zi}$ mod p) from the publicly known element g of the group G and from a random number zi that the subscriber has chosen or generated, and transmits the message to all other subscribers Tj, **in that**
   b) each subscriber Ti generates, from his random number zi and from the messages Nj received from the other subscribers Tj, j ≠ i, a transmission key $k^{ij}$ using the function $k^{ij}$: = $Nj^{zi}$ = $(g^{zj})^{zi}$, which key is also known to the subscriber Tj because of the relationship $k^{ij}$ = $k^{ji}$, **in that**
   c) each subscriber Ti transmits his random number zi in encrypted form to every other subscriber Tj by forming the message Mij in accordance with Mij := E($k^{ij}$, zi), where E($k^{ij}$, zi) is a symmetrical encryption algorithm in which the data record zi is encrypted with the shared transmission key $k^{ij}$, and **in that**
   d) each subscriber Ti determines the shared key k to be established from his own random number zi and from the random numbers zj, j ≠ i, obtained from the other subscribers, using the relationship

   $$k: = f(z1, \ldots, zn)$$

   where f must be a symmetric function that is invariant over permutation of its arguments.

2. Method for establishing a shared key according to claim 1, **characterized in that**

   a) all subscribers Ti participating in the method transmit the message Ni = $g^{zi}$ to a specific subscriber, for example the first subscriber T1, determined in advance for performance of the next step of the method, **in that**
   b) using his random number z1, the first subscriber T1 encrypts, individually for each subscriber Tj, j ≠ 1, the messages Nj received from the other subscribers Tj into one transmission key $k^{1j}$ each, which key is also known to the subscriber Tj because of the relationship $k^{1j}$ = $k^{j1}$, **in that**
   c) the first subscriber T1 transmits his random number z1 in encrypted form to every other subscriber Tj by forming the message M1j in accordance with M1j := E($k^{1j}$, z1), where E($k^{1j}$, z1) is a symmetrical encryption algorithm in which the data record z1 is encrypted with the shared transmission key $k^{1j}$, and **in that**
   d) each subscriber Ti determines the shared key k to be established from the values Ni and Nj, j ≠ 1, and from the random number z1 transmitted in encrypted form by the first subscriber T1, using the formula

   $$k: = h(z1, g^{z2}, \ldots, g^{zn})$$

   where h(zl, $g^{z2}$, ..., $g^{zn}$) is a function that is symmetric in the arguments $g^{z2}$, ..., $g^{zn}$.

## Revendications

**1.** Procédé d'établissement d'une clé commune destinée à un groupe d'au moins trois abonnés, en utilisant un groupe mathématique G publiquement connu et un élément publiquement connu du groupe g E G de grand ordre, **caractérisé en ce que**

a) chaque abonné Ti génère, à partir de l'élément g publiquement connu du groupe G et d'un nombre aléatoire zi qu'il a choisi ou généré, un message Ni = ($g^{zi}$ mod p) et l'envoie à tous les autres abonnés Tj,
b) chaque abonné Ti génère, à partir des messages Nj reçus des autres abonnés Tj, j ≠ i et de son nombre aléatoire zi selon la fonction $k^{ij}$: = $Nj^{zi}$ = $(g^{zj})^{zi}$, une clé de transmission $k^{ij}$ également connue de l'abonné Tj en raison de l'équation $k^{ij}$ = $k^{ji}$,
c) chaque abonné Ti envoie à chacun des autres abonnés Tj son nombre aléatoire zi de manière chiffrée, en formant le message Mij selon Mij: = E($k^{ij}$, zi), E($k^{ij}$, zi) étant un algorithme de chiffrage symétrique dans lequel l'enregistrement zi est chiffré avec la clé de transmission $k^{ij}$ commune,
d) chaque abonné Ti détermine la clé k commune à établir à partir de son propre nombre aléatoire zi et des nombres aléatoires zj, j ≠ i reçus des autres abonnés, selon l'équation

$$k: = f(z1, \ldots, zn),$$

f devant être une fonction symétrique invariante sous la permutation de ses arguments.

**2.** Procédé d'établissement d'une clé commune selon la revendication 1, **caractérisé en ce que**

a) tous les abonnés Ti participant au procédé transmettent le message Ni = $g^{zi}$ qu'ils ont généré à un abonné, le premier abonné T1, par exemple, destiné à l'avance à exécuter l'étape suivante du procédé,
b) le premier abonné T1 chiffre les messages Nj reçus des autres abonnés Tj,j ≠ 1 pour chacun des abonnés Tj individuellement avec son nombre aléatoire z1 pour former respectivement une clé de transmission $k^{1j}$, également connue de l'abonné Tj en raison de l'équation $k^{1j}$ = $k^{j1}$,
c) le premier abonné T1 envoie son nombre aléatoire z1 de manière chiffrée à chacun des autres abonnés Tj, en formant le message M1j selon M1j: = E($k^{1j}$, z1), E($k^{1j}$, z1) étant un algorithme de chiffrage symétrique dans lequel l'enregistrement z1 est chiffré avec la clé de transmission $k^{1j}$ commune,
d) chaque abonné Ti détermine la clé k commune à établir à partir des valeurs Ni et Nj,j ≠ i et du nombre aléatoire z1 transmis de manière chiffrée par le premier abonné T1, à l'aide de la formule

$$k: = h(z1, g^{z2}, \ldots, g^{zn})$$

(z1, $g^{z2}$, ..., $g^{zn}$) étant une fonction symétrique dans les arguments $g^{z2}$,..., $g^{zn}$.